# EUROPEAN PATENT APPLICATION

(11) **EP 4 822 971 A1**
(43) Date of publication of application: **14.10.2026**
(21) Application number: 26171377.0
(22) Date of filing: 09.04.2026
(51) Int. Cl.: H02M 1/32, H02H 7/122, H02M 7/48

(54) **PHOTOVOLTAIC INVERTER**

(30) Priority: 09.04.2025 CN 202510442533
(71) Applicant: Huawei Technologies Co., Ltd., Shenzhen, Guangdong 518129 (CN)
(72) Inventor: CHANG, Song, Shenzhen, 518129 (CN); YUE, Fengting, Shenzhen, 518129 (CN); ZHONG, Zhijian, Shenzhen, 518129 (CN); TANG, Junsong, Shenzhen, 518129 (CN); QIAN, Bin, Shenzhen, 518129 (CN)
(74) Representative: Gill Jennings & Every LLP

(57) **Abstract**

Embodiments of this application disclose a photovoltaic inverter, and relate to the field of energy technologies, to resolve a problem of how to control an inverter circuit to stop operating in a timely manner to improve safety and reliability of the photovoltaic inverter when a differential-mode lightning strike occurs on the photovoltaic inverter. The photovoltaic inverter includes a controller, a direct current port, an inverter circuit, a first surge protector, three first inductors, three first capacitors, three second surge protectors, and a three-phase alternating current port. Three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, and second ends of the three first capacitors are all configured to connect to a grounding end. The controller is configured to: detect a voltage of the three-phase alternating current port, and when a voltage of at least one phase of alternating current port is greater than a voltage threshold, control the inverter circuit to stop operating.

## Description

### TECHNICAL FIELD

This application relates to the field of energy technologies, and in particular, to a photovoltaic inverter.

### BACKGROUND

In a running process of a photovoltaic inverter, a differential-mode lightning strike between phase wires may occur, or a differential-mode lightning strike between a phase wire and a neutral wire may occur. Consequently, a risk of damaging the photovoltaic inverter is high.

A three-phase alternating current port of the photovoltaic inverter may be connected to a surge protector. The surge protector is configured to protect against a common-mode lightning strike or the differential-mode lightning strike, to improve safety and reliability of the photovoltaic inverter. However, a part of differential-mode lightning strike energy may still form a current return path with an inverter circuit via an inverter capacitor in the photovoltaic inverter, which results in a high risk of a failure of a switching transistor in the inverter circuit, and the high risk of damaging the photovoltaic inverter. A controller in the photovoltaic inverter may detect a current of an inverter inductor via a Hall current sensor, and when the current of the inverter inductor is greater than a current threshold, control the inverter circuit to stop operating, thereby further improving the safety and reliability of the photovoltaic inverter.

However, due to an electromagnetic induction phenomenon of the inverter inductor, there is a high delay in current conversion of the inverter inductor, and there are delays in sampling of the Hall current sensor and software processing of the controller. As a result, when the differential-mode lightning strike occurs on the photovoltaic inverter, the controller cannot control the inverter circuit to stop operating in a timely manner. As a result, the risk of damaging the photovoltaic inverter is still high. Therefore, how to control the inverter circuit to stop operating in a timely manner to improve the safety and reliability of the photovoltaic inverter when the differential-mode lightning strike occurs on the photovoltaic inverter becomes an urgent problem to be resolved.

### SUMMARY

Embodiments of this application provide a photovoltaic inverter, to resolve a problem of how to control an inverter circuit to stop operating in a timely manner to improve safety and reliability of the photovoltaic inverter when a differential-mode lightning strike occurs on the photovoltaic inverter.

To achieve the foregoing objectives, the following technical solutions are used in embodiments of this application.

According to a first aspect of embodiments of this application, a photovoltaic inverter is provided. The photovoltaic inverter includes a controller, a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end. The controller is configured to: detect a voltage of the three-phase alternating current port, and when a voltage of at least one phase of alternating current port is greater than a voltage threshold, control the inverter circuit to stop operating. The first inductor may be referred to as an inverter inductor.

Due to an electromagnetic induction phenomenon of the inverter inductor, there is a high delay in current conversion of the inverter inductor. In the conventional technology, when a differential-mode lightning strike occurs on the photovoltaic inverter, the controller controls, based on a current of the inverter inductor, the inverter circuit to stop operating, and cannot control the inverter circuit to stop operating in a timely manner. Consequently, a risk of damaging the photovoltaic inverter is still high. Based on this solution, when the differential-mode lightning strike occurs on the photovoltaic inverter, the controller controls, based on the voltage of the three-phase alternating current port, the inverter circuit to stop operating, and a delay in voltage conversion of the three-phase alternating current port is lower. Therefore, the controller can control the inverter circuit to stop operating in a timely manner, so that safety and reliability of the photovoltaic inverter can be improved.

With reference to the first aspect, in an implementation, the controller is further configured to: when an average value of the voltage of the at least one phase of alternating current port is greater than the voltage threshold within preset time, control the inverter circuit to stop operating.

Based on this solution, when the voltage of the at least one phase of alternating current port occasionally jumps, the controller cannot perform a misoperation to control the inverter circuit to stop operating, so that the reliability of the photovoltaic inverter can be improved.

With reference to the first aspect, in an implementation, the controller is further configured to: when time during which the inverter circuit is controlled to stop operating is greater than or equal to a time threshold, control the inverter circuit to resume normal operation.

Based on this solution, an operating state of the photovoltaic inverter can be resumed in a timely manner, so that power supply continuity and reliability of a photovoltaic system can be improved.

According to a second aspect of embodiments of this application, a photovoltaic inverter is provided. The photovoltaic inverter includes a controller, a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end. The controller is configured to: detect currents of the three first capacitors, and when a current of at least one first capacitor is greater than a first current threshold, control the inverter circuit to stop operating.

Due to an electromagnetic induction phenomenon of an inverter inductor, there is a high delay in current conversion of the inverter inductor. In the conventional technology, when a differential-mode lightning strike occurs on the photovoltaic inverter, the controller controls, based on a current of the inverter inductor, the inverter circuit to stop operating, and cannot control the inverter circuit to stop operating in a timely manner. Consequently, a risk of damaging the photovoltaic inverter is still high. Based on this solution, when the differential-mode lightning strike occurs on the photovoltaic inverter, the controller controls, based on the currents of the three first capacitors, the inverter circuit to stop operating, and a delay in current conversion of the three first capacitors is lower. Therefore, the controller can control the inverter circuit to stop operating in a timely manner, so that safety and reliability of the photovoltaic inverter can be improved.

With reference to the second aspect, in an implementation, the controller is further configured to: when an average value of the current of the at least one first capacitor is greater than the first current threshold within preset time, control the inverter circuit to stop operating.

Based on this solution, when the current of the at least one first capacitor occasionally jumps, the controller cannot perform a misoperation to control the inverter circuit to stop operating, so that the reliability of the photovoltaic inverter can be improved.

With reference to the second aspect, in an implementation, the controller is further configured to: when time during which the inverter circuit is controlled to stop operating is greater than or equal to a time threshold, control the inverter circuit to resume normal operation.

Based on this solution, an operating state of the photovoltaic inverter can be resumed in a timely manner, so that power supply continuity and reliability of a photovoltaic system can be improved.

According to a third aspect of embodiments of this application, a photovoltaic inverter is provided. The photovoltaic inverter includes a controller, a direct current port, an inverter circuit, a first surge protector, three first inductors, three first capacitors, three second surge protectors, a three-phase alternating current port, and three second inductors, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, and the three second inductors are respectively connected between the second ends of the three first inductors and the three-phase alternating current port. The controller is configured to: detect currents of the three second inductors, and when a current of at least one second inductor is greater than a second current threshold, control the inverter circuit to stop operating.

Due to an electromagnetic induction phenomenon of an inverter inductor, there is a high delay in current conversion of the inverter inductor. In the conventional technology, when a differential-mode lightning strike occurs on the photovoltaic inverter, the controller controls, based on a current of the inverter inductor, the inverter circuit to stop operating, and cannot control the inverter circuit to stop operating in a timely manner. Consequently, a risk of damaging the photovoltaic inverter is still high. Based on this solution, when the differential-mode lightning strike occurs on the photovoltaic inverter, the controller controls, based on the currents of the three second inductors, the inverter circuit to stop operating, and a delay in current conversion of the three second inductors is lower. Therefore, the controller can control the inverter circuit to stop operating in a timely manner, so that safety and reliability of the photovoltaic inverter can be improved.

With reference to the third aspect, in an implementation, the controller is further configured to: when an average value of the current of the at least one second inductor is greater than the second current threshold within preset time, control the inverter circuit to stop operating.

Based on this solution, when the current of the at least one second inductor occasionally jumps, the controller cannot perform a misoperation to control the inverter circuit to stop operating, so that the reliability of the photovoltaic inverter can be improved.

With reference to the third aspect, in an implementation, the controller is further configured to: when time during which the inverter circuit is controlled to stop operating is greater than or equal to a time threshold, control the inverter circuit to resume normal operation.

Based on this solution, an operating state of the photovoltaic inverter can be resumed in a timely manner, so that power supply continuity and reliability of a photovoltaic system can be improved.

According to a fourth aspect of embodiments of this application, a photovoltaic inverter is provided. The photovoltaic inverter includes a controller, a direct current port, an inverter circuit, a first surge protector, three first inductors, three first capacitors, three second surge protectors, a three-phase alternating current port, three second inductors, and three second capacitors, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, the three second inductors are respectively connected between the second ends of the three first inductors and the three-phase alternating current port, first ends of the three second capacitors are respectively connected to the first ends of the three second surge protectors, and second ends of the three second capacitors are all configured to connect to the grounding end. The controller is configured to: detect currents of the three second capacitors, and when a current of at least one second capacitor is greater than a third current threshold, control the inverter circuit to stop operating.

Due to an electromagnetic induction phenomenon of an inverter inductor, there is a high delay in current conversion of the inverter inductor. In the conventional technology, when a differential-mode lightning strike occurs on the photovoltaic inverter, the controller controls, based on a current of the inverter inductor, the inverter circuit to stop operating, and cannot control the inverter circuit to stop operating in a timely manner. Consequently, a risk of damaging the photovoltaic inverter is still high. Based on this solution, when the differential-mode lightning strike occurs on the photovoltaic inverter, the controller controls, based on the currents of the three second capacitors, the inverter circuit to stop operating, and a delay in current conversion of the three second capacitors is lower. Therefore, the controller can control the inverter circuit to stop operating in a timely manner, so that safety and reliability of the photovoltaic inverter can be improved.

With reference to the fourth aspect, in an implementation, the controller is further configured to: when an average value of the current of the at least one second capacitor is greater than the third current threshold within preset time, control the inverter circuit to stop operating.

Based on this solution, when the current of the at least one second capacitor occasionally jumps, the controller cannot perform a misoperation to control the inverter circuit to stop operating, so that the reliability of the photovoltaic inverter can be improved.

With reference to the fourth aspect, in an implementation, the controller is further configured to: when time during which the inverter circuit is controlled to stop operating is greater than or equal to a time threshold, control the inverter circuit to resume normal operation.

Based on this solution, an operating state of the photovoltaic inverter can be resumed in a timely manner, so that power supply continuity and reliability of a photovoltaic system can be improved.

According to a fifth aspect of embodiments of this application, a photovoltaic inverter control method is provided, and is applied to a photovoltaic inverter. The photovoltaic inverter includes a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end. The method includes: detecting a voltage of the three-phase alternating current port, and when a voltage of at least one phase of alternating current port is greater than a voltage threshold, controlling the inverter circuit to stop operating.

According to a sixth aspect of embodiments of this application, a photovoltaic inverter control method is provided, and is applied to a photovoltaic inverter. The photovoltaic inverter includes a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end. The method includes: detecting currents of the three first capacitors, and when a current of at least one first capacitor is greater than a first current threshold, controlling the inverter circuit to stop operating.

According to a seventh aspect of embodiments of this application, a photovoltaic inverter control method is provided, and is applied to a photovoltaic inverter. The photovoltaic inverter includes a direct current port, an inverter circuit, a first surge protector, three first inductors, three first capacitors, three second surge protectors, a three-phase alternating current port, and three second inductors, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, and the three second inductors are respectively connected between the second ends of the three first inductors and the three-phase alternating current port. The method includes: detecting currents of the three second inductors, and when a current of at least one second inductor is greater than a second current threshold, controlling the inverter circuit to stop operating.

According to an eighth aspect of embodiments of this application, a photovoltaic inverter control method is provided, and is applied to a photovoltaic inverter. The photovoltaic inverter includes a direct current port, an inverter circuit, a first surge protector, three first inductors, three first capacitors, three second surge protectors, a three-phase alternating current port, three second inductors, and three second capacitors, the direct current port is configured to connect to a photovoltaic array, and the three-phase alternating current port is configured to connect to a power grid or a load. An input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, the three second inductors are respectively connected between the second ends of the three first inductors and the three-phase alternating current port, first ends of the three second capacitors are respectively connected to the first ends of the three second surge protectors, and second ends of the three second capacitors are all configured to connect to the grounding end. The method includes: detecting currents of the three second capacitors, and when a current of at least one second capacitor is greater than a third current threshold, controlling the inverter circuit to stop operating.

For descriptions of the fifth aspect in this application, refer to the detailed descriptions of the first aspect, and for beneficial effect of the fifth aspect, refer to analysis of beneficial effect of the first aspect. For descriptions of the sixth aspect in this application, refer to the detailed descriptions of the second aspect, and for beneficial effect of the sixth aspect, refer to analysis of beneficial effect of the second aspect. For descriptions of the seventh aspect in this application, refer to the detailed descriptions of the third aspect, and for beneficial effect of the seventh aspect, refer to analysis of beneficial effect of the third aspect. For descriptions of the eighth aspect in this application, refer to the detailed descriptions of the fourth aspect, and for beneficial effect of the eighth aspect, refer to analysis of beneficial effect of the fourth aspect. Details are not described herein again.

### BRIEF DESCRIPTION OF DRAWINGS

FIG. 1 is a schematic of a circuit topology of a photovoltaic system;
FIG. 2 is a schematic of a circuit topology of another photovoltaic system;
FIG. 3 is a schematic of a circuit topology of a photovoltaic inverter;
FIG. 4 is a diagram of change curves of a current and a voltage in a photovoltaic inverter;
FIG. 5 is a schematic of a circuit topology of an application scenario of a photovoltaic inverter according to an embodiment of this application;
FIG. 6 is a schematic of a circuit topology of a photovoltaic inverter according to an embodiment of this application;
FIG. 7 is a diagram of change curves of a current and a voltage in a photovoltaic inverter according to an embodiment of this application;
FIG. 8 is a schematic of another circuit topology of a photovoltaic inverter according to an embodiment of this application;
FIG. 9 is a schematic of still another circuit topology of a photovoltaic inverter according to an embodiment of this application;
FIG. 10 is a schematic flowchart of a photovoltaic inverter control method according to an embodiment of this application; and
FIG. 11A and FIG. 11B are a schematic flowchart of another photovoltaic inverter control method according to an embodiment of this application.

### DESCRIPTION OF EMBODIMENTS

Making and use of embodiments are discussed in detail below. However, it should be understood that many applicable inventive concepts provided in this application may be implemented in a plurality of specific environments. Specific embodiments discussed are merely used to describe specific manners to implement and use this specification and this technology, and do not limit the scope of this application.

Unless otherwise defined, all technical terms used herein have the same meaning as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes technical solutions in embodiments of this application with reference to accompanying drawings in embodiments of this application. In this application, "at least one/at least one phase" means one or more/one or more phases, and "a plurality of/a plurality of phases" means two or more/two or more phases. A character "/" usually indicates an "or" relationship between associated objects. In embodiments of this application, terms such as "first" and "second" do not limit a quantity and a sequence.

In this application, words such as "example" or "for example" indicate giving an example, an illustration, or a description. Any embodiment or design scheme described as an "example" or "for example" in this application should not be explained as being more preferred or having more advantages than another embodiment or design scheme. Exactly, use of the words such as "example" or "for example" is intended to present a relative concept in a specific manner.

Before embodiments of this application are described, the background of this application is first described.

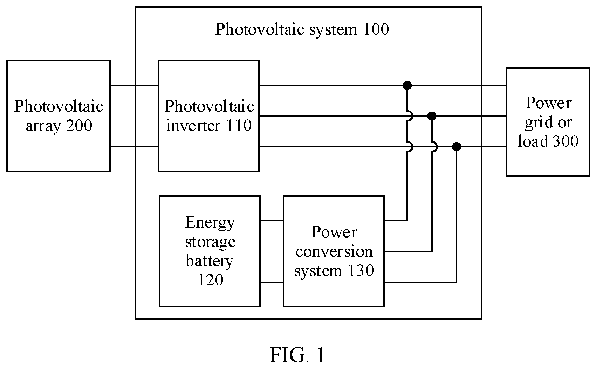

FIG. 1 is a schematic of a circuit topology of a photovoltaic system 100. The photovoltaic system 100 includes a photovoltaic inverter 110. A direct current port of the photovoltaic inverter 110 is configured to connect to a photovoltaic array 200, and a three-phase alternating current port of the photovoltaic inverter 110 is configured to connect to a power grid or a load 300. The photovoltaic array 200 is configured to convert solar energy into a direct current, and the photovoltaic inverter 110 is configured to: convert the direct current into an alternating current, and transmit the alternating current to the power grid or the load 300.

In an implementation, as shown in FIG. 1, the photovoltaic system 100 may further include an energy storage battery 120 and a power conversion system (power conversion system, PCS) 130. An electrode of the energy storage battery 120 is connected to a direct current port of the power conversion system 130, and a three-phase alternating current port of the power conversion system 130 are connected to the three-phase alternating current port of the photovoltaic inverter 110. The power conversion system 130 is configured to convert the alternating current output by the photovoltaic inverter 110 into a direct current, or convert an alternating current provided by the power grid or the load 300 into a direct current, to charge the energy storage battery 120. The power conversion system 130 is further configured to convert a direct current output by the energy storage battery 120 into an alternating current, to supply power to the power grid or the load 300.

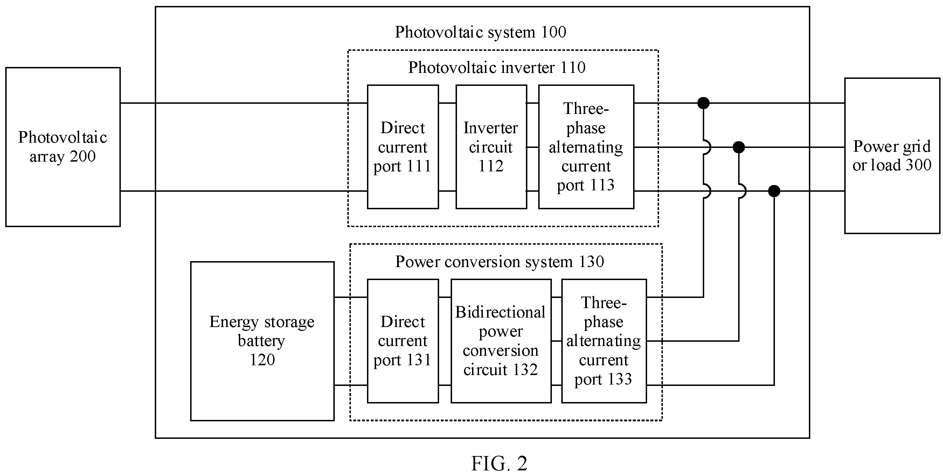

FIG. 2 is a schematic of a circuit topology of another photovoltaic system 100. A photovoltaic inverter 110 includes a direct current port 111, an inverter circuit 112, and a three-phase alternating current port 113. A power conversion system 130 includes a direct current port 131, a bidirectional power conversion circuit 132, and a three-phase alternating current port 133. A difference between the photovoltaic inverter 110 and the power conversion system 130 lies in that the inverter circuit 112 in the photovoltaic inverter 110 is configured to convert a direct current into an alternating current, and the bidirectional power conversion circuit 132 in the power conversion system 130 is configured to convert a direct current into an alternating current, and is further configured to convert an alternating current into a direct current. A similarity between the photovoltaic inverter 110 and the power conversion system 130 lies in that both the inverter circuit 112 and the bidirectional power conversion circuit 132 include switching transistors, and both alternating current sides are connected to a power grid or a load 300. Therefore, when a differential-mode lightning strike occurs, differential-mode lightning strike protection solutions of the photovoltaic inverter 110 and the power conversion system 130 may be mutually referenced. In embodiments of this application, the photovoltaic inverter 110 is used as an example to describe the differential-mode lightning strike protection solutions of the photovoltaic inverter 110 and the power conversion system 130.

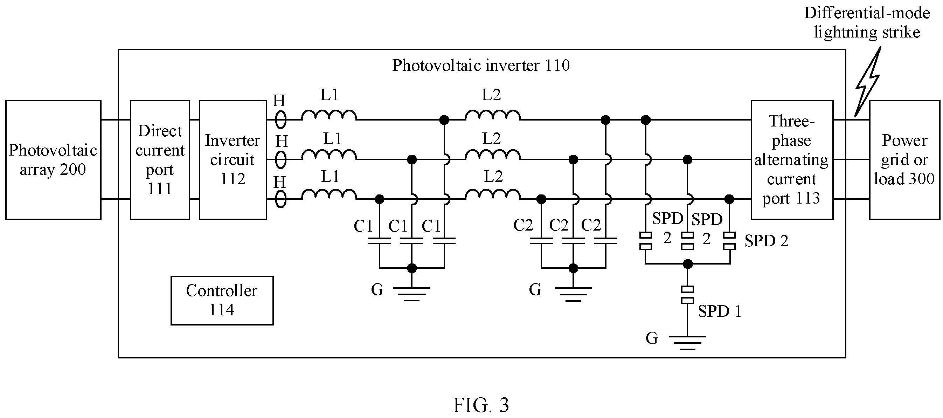

FIG. 3 is a schematic of a circuit topology of a photovoltaic inverter 110. The photovoltaic inverter 110 includes a direct current port 111, an inverter circuit 112, three first inductors L1, three first capacitors C1, three second inductors L2, three second capacitors C2, and a three-phase alternating current port 113. The direct current port 111 is configured to connect to a photovoltaic array 200, and the three phases of alternating current ports 113 are configured to connect to a power grid or a load 300.

An input end of the inverter circuit 112 is connected to the direct current port 111, three phases of output ends of the inverter circuit 112 are respectively connected to first ends of the three first inductors L1, second ends of the three first inductors L1 are respectively connected to first ends of the three second inductors L2, and second ends of the three second inductors L2 are separately connected to the three-phase alternating current port 113. First ends of the three first capacitors C1 are respectively connected to the second ends of the three first inductors L1, and second ends of the three first capacitors C1 are all configured to connect to a grounding end (ground, G). The three second capacitors C2 are respectively connected between the three-phase alternating current port 113 and the grounding end. The three first inductors L1 may be referred to as inverter inductors, the three first capacitors C1 may be referred to as inverter capacitors, the three second inductors L2 may be referred to as port inductors, and the three second capacitors C2 may be referred to as port capacitors.

Refer to FIG. 3. In a running process of the photovoltaic inverter 110, a differential-mode lightning strike between phase wires (L-L) may occur, or a differential-mode lightning strike between a phase wire and a neutral wire (L-N) may occur. Consequently, a risk of damaging the photovoltaic inverter 110 is high.

Refer to FIG. 3. The photovoltaic inverter 110 may further include a first surge protector SPD 1 and three second surge protectors SPD 2. The surge protector may also be referred to as a surge protective device (SPD). First ends of the three second surge protectors SPD 2 are separately connected to the three-phase alternating current port 113, second ends of the three second surge protectors SPD 2 are all connected to a first end of the first surge protector SPD 1, and a second end of the first surge protector SPD 1 is configured to connect to the grounding end. The first surge protector SPD 1 may also be referred to as a common surge protector. The first surge protector SPD 1 and the three second surge protectors SPD 2 are configured to protect against a common-mode lightning strike or the differential-mode lightning strike, to improve safety and reliability of the photovoltaic inverter 110.

Although two second surge protectors SPD 2 connected in series between phase wires may clamp differential-mode lightning strike energy between the phase wires, a part of the differential-mode lightning strike energy may still form a current return path with the inverter circuit 112 via the three first capacitors C1 (inverter capacitors), which results in a high risk of a failure of a switching transistor in the inverter circuit 112, and the high risk of damaging the photovoltaic inverter 110.

Refer to FIG. 3. The photovoltaic inverter 110 may further include a controller 114 and three Hall current sensors H. The controller 114 may detect currents of the three first inductors L1 (inverter inductors) via the three Hall current sensors H, and when the currents of the three first inductors L1 are greater than a current threshold, control the inverter circuit 112 to stop operating, and control the switching transistor in the inverter circuit 112 to be in an off state, thereby further improving the safety and reliability of the photovoltaic inverter 110.

However, due to an electromagnetic induction phenomenon of the first inductor L1, there is a high delay in current conversion of the first inductor L1, and there are delays in sampling of the Hall current sensor H and software processing of the controller 114. As a result, when the differential-mode lightning strike occurs on the photovoltaic inverter 110, the controller 114 cannot control the inverter circuit 112 to stop operating in a timely manner. As a result, the risk of damaging the photovoltaic inverter 110 is still high.

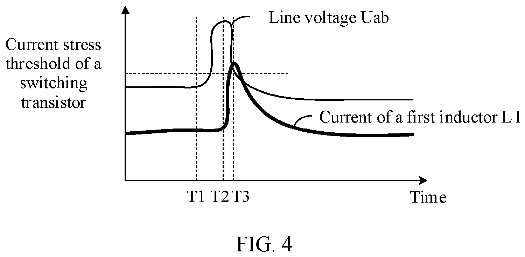

For example, FIG. 4 is a diagram of change curves of a current and a voltage in the photovoltaic inverter 110. At a moment T1, a differential-mode lightning strike occurs on the photovoltaic inverter 110, and a line voltage Uab between a phase-A alternating current port and a phase-B alternating current port in the three-phase alternating current port 113 rapidly increases. Due to a feature of the first inductor L1, there is the high delay in the current conversion of the first inductor L1, and the current of the first inductor L1 starts to increase at a moment T2. When the current of the first inductor L1 is greater than the current threshold, because there are the delays in the sampling of the Hall current sensor H and the software processing of the controller 114, the controller 114 controls the inverter circuit 112 to stop operating at a moment T3. However, if the current of the first inductor L1 at the moment T3 is greater than a current stress threshold of the switching transistor, there is a high risk of a failure of the switching transistor in the inverter circuit 112, and there is a high risk of damaging the photovoltaic inverter 110.

Therefore, how to control the inverter circuit to stop operating in a timely manner to improve the safety and reliability of the photovoltaic inverter 110 when the differential-mode lightning strike occurs on the photovoltaic inverter 110 becomes an urgent problem to be resolved.

In view of this, embodiments of this application provide a photovoltaic inverter. A controller in the photovoltaic inverter controls, based on a voltage or a current with a low delay in the photovoltaic inverter, an inverter circuit to stop operating, so that when a differential-mode lightning strike occurs in the photovoltaic inverter, the inverter circuit can be controlled to stop operating in a timely manner, to improve safety and reliability of the photovoltaic inverter.

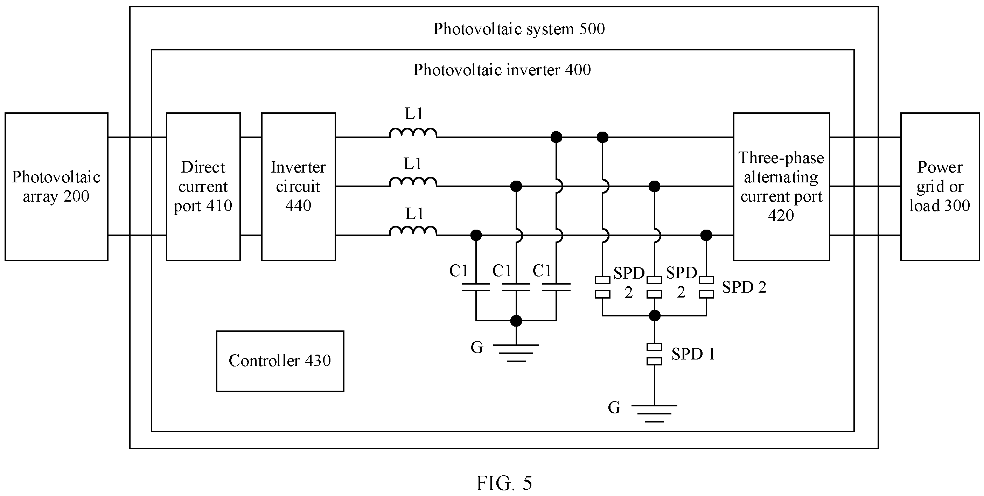

As shown in FIG. 5, a photovoltaic inverter 400 provided in this embodiment of this application may be an independent device.

FIG. 5 is a schematic of a circuit topology of an application scenario of the photovoltaic inverter 400 according to an embodiment of this application. The photovoltaic inverter 400 may be used in a photovoltaic system 500. The photovoltaic inverter 400 includes a direct current port 410 and a three-phase alternating current port 420. The direct current port 410 is configured to connect to an output end of a photovoltaic array 200, and the three phases of alternating current ports 420 are configured to connect to a power grid or a load 300. The photovoltaic array 200 is configured to convert solar energy into a direct current, and the photovoltaic inverter 400 is configured to convert the direct current into an alternating current, to supply power to the power grid or the load 300.

In an implementation, the direct current port 410 of the photovoltaic inverter 400 provided in this embodiment of this application may be configured to connect to a battery pack, and the photovoltaic inverter 400 may also be referred to as a photovoltaic energy storage inverter.

In an implementation, a differential-mode lightning strike protection solution of the photovoltaic inverter 400 provided in this embodiment of this application may also be applied to a power conversion system or another three-phase alternating current device that needs to be connected to the power grid or the load 300. This is not limited in embodiments of this application.

Refer to FIG. 5. The photovoltaic inverter 400 provided in this embodiment of this application further includes a controller 430, an inverter circuit 440, a first surge protector SPD 1, three first inductors L1, three first capacitors C1, and three second surge protectors SPD 2. An input end of the inverter circuit 440 is connected to the direct current port 410, three phases of output ends of the inverter circuit 440 are respectively connected to first ends of the three first inductors L1, and second ends of the three first inductors L1 are separately connected to the three-phase alternating current port 420. First ends of the three first capacitors C1 are respectively connected to the second ends of the three first inductors L1, second ends of the three first capacitors C1 are all configured to connect to a grounding end G, first ends of the three second surge protectors SPD 2 are separately connected to the three-phase alternating current port 420, second ends of the three second surge protectors SPD 2 are all connected to a first end of the first surge protector SPD 1, and a second end of the first surge protector SPD 1 is configured to connect to the grounding end G. The three first inductors L1 may be referred to as inverter inductors, and the third first capacitor C1 may be referred to as inverter capacitors.

The controller 430 is configured to: detect a voltage of the three-phase alternating current port 420, and when a voltage of at least one phase of alternating current port is greater than a voltage threshold, control the inverter circuit 440 to stop operating. A specific value of the voltage threshold may be comprehensively determined based on a withstand voltage value or a withstand current value of a switching transistor in the inverter circuit 440. The specific value of the voltage threshold is not limited in embodiments of this application.

In an implementation, an example in which the controller 430 detects the voltage of the three-phase alternating current port 420, and that the controller 430 detects a voltage of a phase-A alternating current port in the three-phase alternating current port 420 includes: The controller 430 detects a phase voltage between the phase-A alternating current port and a neutral wire, so that when a differential-mode lightning strike between a phase wire and the neutral wire occurs in the photovoltaic inverter 400, the inverter circuit 440 can be controlled to stop operating in a timely manner, thereby improving safety and reliability of the photovoltaic inverter 400. Alternatively, the controller 430 detects a line voltage between the A-phase alternating current port and a B-phase alternating current port, or the controller 430 detects a line voltage between the A-phase alternating current port and a C-phase alternating current port, so that when a differential-mode lightning strike between phase wires occurs in the photovoltaic inverter 400, the inverter circuit 440 can be controlled to stop operating in a timely manner, thereby improving the safety and reliability of the photovoltaic inverter 400.

In an implementation, as shown in FIG. 5, the photovoltaic inverter 400 provided in this embodiment of this application may be a three-phase three-wire photovoltaic inverter. That the controller 430 detects the phase voltage between the phase-A alternating current port and the neutral wire includes: The controller 430 determines a phase voltage of the phase-A alternating current port through calculation based on a line voltage of the phase-A alternating current port.

In an implementation, when the photovoltaic inverter 400 provided in this embodiment of this application is a three-phase four-wire photovoltaic inverter, and the photovoltaic inverter 400 includes a neutral wire (not shown in the figure), that the controller 430 detects the phase voltage between the phase-A alternating current port and the neutral wire includes: The controller 430 directly detects the phase voltage between the phase-A alternating current port and the neutral wire.

In an implementation, that the controller 430 detects the voltage of the three-phase alternating current port 420 includes: The controller 430 may detect the voltage of the three-phase alternating current port 420 via a voltage sensor like a voltage transformer, a resistive voltage divider, or a Hall voltage sensor. The voltage sensor may be selected based on an actual situation. A specific type of the used voltage sensor is not limited in embodiments of this application.

In an implementation, that the controller 430 controls the inverter circuit 440 to stop operating includes: The controller 430 controls the switching transistor in the inverter circuit 440 to be in an off state.

In an implementation, the controller 430 is further configured to: when an average value of the voltage of the at least one phase of alternating current port is greater than the voltage threshold within preset time, control the inverter circuit 440 to stop operating. A specific value of the preset time is not limited in embodiments of this application. Therefore, when the voltage of the at least one phase of alternating current port occasionally jumps, the controller 430 cannot perform a misoperation to control the inverter circuit 440 to stop operating, so that the reliability of the photovoltaic inverter 400 can be improved.

In an implementation, because time during which the differential-mode lightning strike occurs on the photovoltaic inverter 400 is usually short, the controller 430 is further configured to: when time during which the inverter circuit 440 is controlled to stop operating is greater than or equal to a time threshold, control the inverter circuit 440 to resume normal operation, so that an operating state of the photovoltaic inverter 400 can be resumed in a timely manner, and power supply continuity and reliability of the photovoltaic system 500 can be improved.

In an implementation, the controller 430 includes a digital signal processing (DSP) chip or a microcontroller unit (MCU). The microcontroller unit may also be referred to as a single-chip microcomputer, and the controller 430 may be selected based on an actual situation. A specific type of the controller 430 is not limited in embodiments of this application.

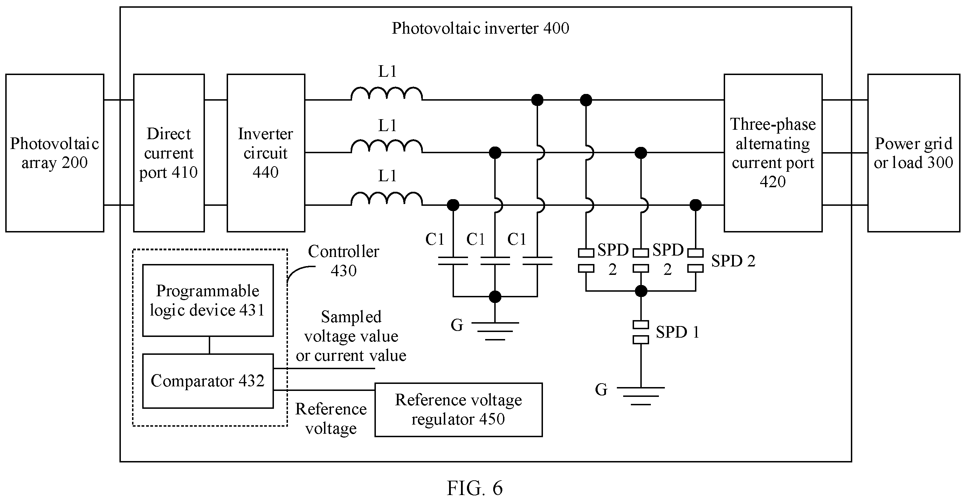

In an implementation, FIG. 6 is a schematic of a circuit topology of the photovoltaic inverter 400 according to an embodiment of this application. The controller 430 may include a programmable logic device 431 and a comparator 432, and the comparator 432 may also be referred to as a hardware comparator. A first input end of the comparator 432 is configured to receive a voltage value sampled by a voltage sampling circuit, or a current value sampled by a current sampling circuit in the following embodiments. A second input end of the comparator 432 is configured to receive a reference voltage, where the reference voltage indicates the voltage threshold or the current threshold in the following embodiments. An output end of the comparator 432 is configured to send an operating stop instruction to the programmable logic device 431, and the programmable logic device 431 is configured to control, according to the operating stop instruction, the inverter circuit 440 to stop operating. Compared with a case in which the controller 430 determines, through software, whether a sampled voltage value is greater than the voltage threshold or whether a sampled current value is greater than the current threshold, a case in which the controller 430 includes the comparator 432 with a faster comparison speed enables the controller 430 to control the inverter circuit 440 to stop operating in a more timely manner, so that the safety and reliability of the photovoltaic inverter 400 can be further improved.

In an implementation, the programmable logic device 431 includes a complex programmable logic device (CPLD) or a field programmable gate array (FPGA). The programmable logic device 431 may be selected based on an actual situation. A specific type of the programmable logic device 431 is not limited in embodiments of this application.

In an implementation, as shown in FIG. 6, the photovoltaic inverter 400 provided in this embodiment of this application further includes a reference voltage regulator 450. The reference voltage regulator 450 is configured to provide the reference voltage received by the second input end of the comparator 432.

Due to an electromagnetic induction phenomenon of the first inductor L1 (inverter inductor), there is a high delay in current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter 400 provided in this embodiment of this application, when the differential-mode lightning strike occurs on the photovoltaic inverter 400, the controller 430 controls, based on the voltage of the three-phase alternating current port 420, the inverter circuit 440 to stop operating, and a delay in voltage conversion of the three-phase alternating current port 420 is lower. Therefore, the controller 430 can control the inverter circuit 440 to stop operating in a timely manner, thereby improving the safety and reliability of the photovoltaic inverter 400.

In an implementation, as shown in FIG. 6, the controller 430 is further configured to: detect currents of the three first capacitors C1, and when a current of at least one first capacitor C1 is greater than a first current threshold, control the inverter circuit 440 to stop operating. A specific value of the first current threshold may be comprehensively determined based on the withstand voltage value or the withstand current value of the switching transistor in the inverter circuit 440. The specific value of the first current threshold is not limited in embodiments of this application.

In an implementation, that the controller 430 detects the currents of the three first capacitors C1, and that the controller 430 detects a current of another component in the following embodiments includes: The controller 430 may detect the currents of the three first capacitors C1 via a current sensor like a Hall current sensor, an electromagnetic current sensor, or a current transformer. The current sensor may be selected based on an actual situation. A specific type of the used current sensor is not limited in embodiments of this application.

In an implementation, the controller 430 is further configured to: when an average value of the current of the at least one first capacitor C1 is greater than the first current threshold within preset time, control the inverter circuit 440 to stop operating. A specific value of the preset time is not limited in embodiments of this application. Therefore, when the current of the at least one first capacitor C1 occasionally jumps, the controller 430 cannot perform a misoperation to control the inverter circuit 440 to stop operating, so that the reliability of the photovoltaic inverter 400 can be improved.

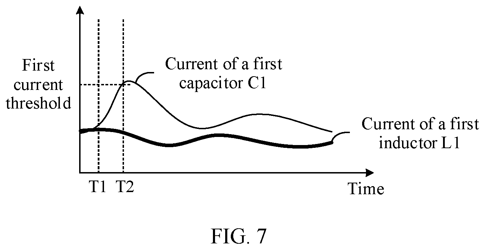

FIG. 7 is a diagram of change curves of a current and a voltage in the photovoltaic inverter 110 according to an embodiment of this application. At a moment T1, a differential-mode lightning strike occurs on the photovoltaic inverter 110, and the current of the first capacitor C1 starts to increase. At a moment T2, the current of the first capacitor C1 is greater than the first current threshold, and the controller 430 controls the inverter circuit 440 to stop operating. Therefore, before the current of the first inductor L1 increases, the controller 430 controls the switching transistor in the inverter circuit 440 to be in the off state, and the switching transistor in the inverter circuit 440 is turned off when a small current flows through, so that a risk of a failure of the switching transistor in the inverter circuit 440 can be reduced, and the safety and reliability of the photovoltaic inverter 110 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter 400 provided in this embodiment of this application, when the differential-mode lightning strike occurs on the photovoltaic inverter 400, the controller 430 controls, based on the currents of the three first capacitors C1, the inverter circuit 440 to stop operating, and a delay in current conversion of the three first capacitors C1 is lower. Therefore, the controller 430 can control the inverter circuit 440 to stop operating in a timely manner, thereby improving the safety and reliability of the photovoltaic inverter 400.

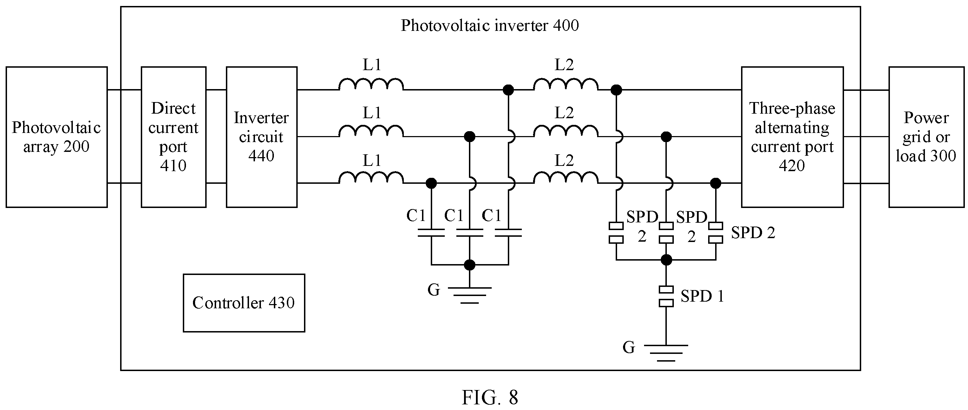

In an implementation, based on FIG. 6, FIG. 8 is a schematic of another circuit topology of the photovoltaic inverter 400 according to an embodiment of this application. The photovoltaic inverter 400 further includes three second inductors L2, the three second inductors L2 are respectively connected between the second ends of the three first inductors L1 and the three-phase alternating current port 420, and the three second inductors L2 may be referred to as port inductors.

The controller 430 is further configured to: detect currents of the three second inductors L2, and when a current of at least one second inductor L2 is greater than a second current threshold, control the inverter circuit 440 to stop operating. A specific value of the second current threshold may be comprehensively determined based on the withstand voltage value or the withstand current value of the switching transistor in the inverter circuit 440. The specific value of the second current threshold is not limited in embodiments of this application.

In an implementation, the controller 430 may detect currents at ends at which the three second inductors L2 are connected to the three first inductors L1, or may detect currents at ends at which the three second inductors L2 are connected to the three-phase alternating current port 420. A current detection location may be selected based on an actual situation. A specific current detection location is not limited in embodiments of this application.

In an implementation, the controller 430 is further configured to: when an average value of the current of the at least one second inductor L2 is greater than the second current threshold within preset time, control the inverter circuit 440 to stop operating. A specific value of the preset time is not limited in embodiments of this application. Therefore, when the current of the at least one second inductor L2 occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter 400 provided in this embodiment of this application, when the differential-mode lightning strike occurs on the photovoltaic inverter 400, the controller 430 controls, based on the currents of the three second inductors L2, the inverter circuit 440 to stop operating, and a delay in current conversion of the three second inductors L2 is lower. Therefore, the controller 430 can control the inverter circuit 440 to stop operating in a timely manner, thereby improving the safety and reliability of the photovoltaic inverter 400.

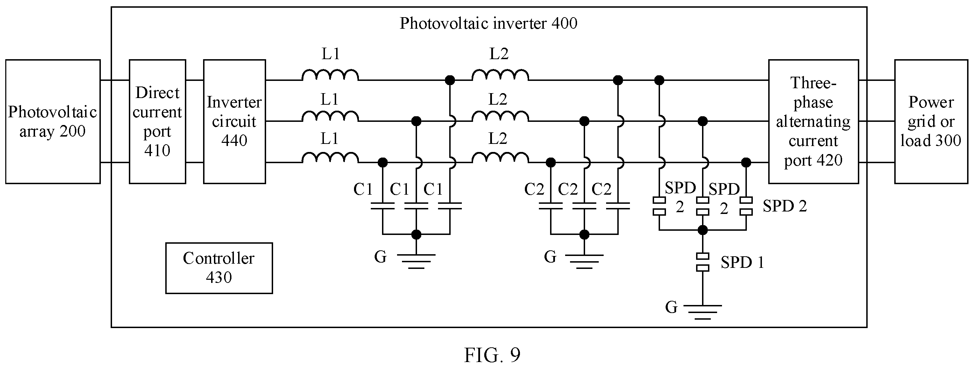

In an implementation, based on FIG. 8, FIG. 9 is a schematic of still another circuit topology of the photovoltaic inverter 400 according to an embodiment of this application. The photovoltaic inverter 400 further includes three second capacitors C2, first ends of the three second capacitors C2 are respectively connected to the first ends of the three second surge protectors SPD 2, and second ends of the three second capacitors C2 are all configured to connect to the grounding end G. The three second capacitors C2 may be referred to as port capacitors.

The controller 430 is further configured to: detect currents of the three second capacitors C2, and when a current of at least one second capacitor C2 is greater than a third current threshold, control the inverter circuit 440 to stop operating. A specific value of the third current threshold may be comprehensively determined based on the withstand voltage value or the withstand current value of the switching transistor in the inverter circuit 440. The specific value of the third current threshold is not limited in embodiments of this application.

In an implementation, the controller 430 is further configured to: when an average value of the current of the at least one second capacitor C2 is greater than the third current threshold within preset time, control the inverter circuit 440 to stop operating. A specific value of the preset time is not limited in embodiments of this application. Therefore, when the current of the at least one second capacitor C2 occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter 400 provided in this embodiment of this application, when the differential-mode lightning strike occurs on the photovoltaic inverter 400, the controller 430 controls, based on the currents of the three second capacitors C2, the inverter circuit 440 to stop operating, and a delay in current conversion of the three second capacitors C2 is lower. Therefore, the controller 430 can control the inverter circuit 440 to stop operating in a timely manner, thereby improving the safety and reliability of the photovoltaic inverter 400.

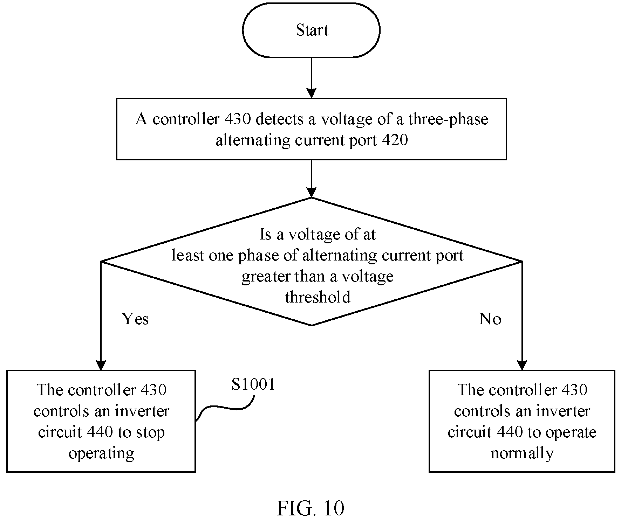

As shown in FIG. 10, an embodiment of this application further provides a photovoltaic inverter control method, applied to the photovoltaic inverter 400. The method includes step S1001.

S1001: The controller 430 detects the voltage of the three-phase alternating current port 420, and when the voltage of the at least one phase of alternating current port is greater than the voltage threshold, controls the inverter circuit 440 to stop operating. The specific value of the voltage threshold may be comprehensively determined based on the withstand voltage value or the withstand current value of the switching transistor in the inverter circuit 440. The specific value of the voltage threshold is not limited in embodiments of this application.

In an implementation, when the voltage of the three-phase alternating current port 420 is less than or equal to the voltage threshold, the controller 430 may control the inverter circuit 440 to operate normally.

In an implementation, that the controller 430 controls, when the voltage of the at least one phase of alternating current port is greater than the voltage threshold, the inverter circuit 440 to stop operating includes: The controller 430 controls, when the average value of the voltage of the at least one phase of alternating current port is greater than the voltage threshold within the preset time, the inverter circuit 440 to stop operating. A specific value of the preset time is not limited in embodiments of this application. Therefore, when the voltage of the at least one phase of alternating current port occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter control method provided in this embodiment of this application, when the differential-mode lightning strike occurs on the photovoltaic inverter 400, the controller 430 controls, based on the voltage of the three-phase alternating current port 420, the inverter circuit 440 to stop operating, and the delay in the voltage conversion of the three-phase alternating current port 420 is lower. Therefore, the controller 430 can control the inverter circuit 440 to stop operating in a timely manner, thereby improving the safety and reliability of the photovoltaic inverter 400.

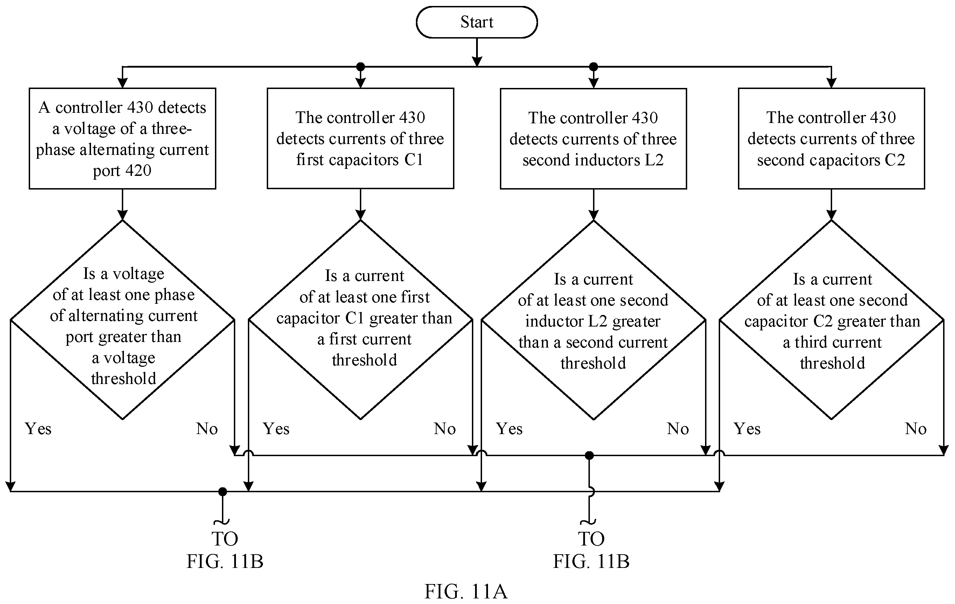

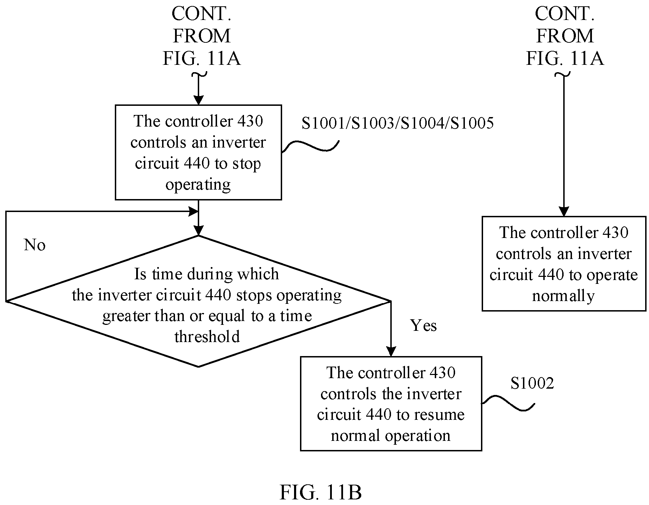

In an implementation, as shown in FIG. 11A and FIG. 11B, after step S1001, the photovoltaic inverter control method provided in this embodiment of this application further includes step S1002.

S1002: The controller 430 controls, when the time during which the inverter circuit 440 is controlled to stop operating is greater than or equal to the time threshold, the inverter circuit 440 to resume normal operation. A specific value of the time threshold is not limited in embodiments of this application.

According to the photovoltaic inverter control method provided in this embodiment of this application, the operating state of the photovoltaic inverter 400 can be resumed in a timely manner, so that the power supply continuity and reliability of the photovoltaic system 500 can be improved.

In an implementation, as shown in FIG. 6 and FIG. 11A and FIG. 11B, the photovoltaic inverter control method provided in this embodiment of this application further includes step S1003. When step S1003 is performed, step S1003 and step S1001 may be simultaneously performed, and step S1002 may be performed after step S1003.

S1003: The controller 430 detects the currents of the three first capacitors C1, and when the current of the at least one first capacitor C1 is greater than the first current threshold, controls the inverter circuit 440 to stop operating. The specific value of the first current threshold may be comprehensively determined based on the withstand voltage value or the withstand current value of the switching transistor in the inverter circuit 440. The specific value of the first current threshold is not limited in embodiments of this application.

In an implementation, when the currents of the three first capacitors C1 are all less than or equal to the first current threshold, the controller 430 may control the inverter circuit 440 to operate normally.

In an implementation, that the controller 430 controls, when the current of the at least one first capacitor C1 is greater than the first current threshold, the inverter circuit 440 to stop operating includes: The controller 430 controls, when the average value of the current of the at least one first capacitor C1 is greater than the first current threshold within the preset time, the inverter circuit 440 to stop operating. The specific value of the preset time is not limited in embodiments of this application. Therefore, when the current of the at least one first capacitor C1 occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter control method provided in this embodiment of this application, when the differential-mode lightning strike occurs on the photovoltaic inverter 400, the controller 430 controls, based on the currents of the three first capacitors C1, the inverter circuit 440 to stop operating, and the delay in the current conversion of the three first capacitors C1 is lower. Therefore, the controller 430 can control the inverter circuit 440 to stop operating in a timely manner, thereby improving the safety and reliability of the photovoltaic inverter 400.

In an implementation, as shown in FIG. 8 and FIG. 11A and FIG. 11B, the photovoltaic inverter control method provided in this embodiment of this application further includes step S1004. When step S1004 is performed, step S1004 and step S1001 may be simultaneously performed, and step S1002 may be performed after step S1004.

S1004: The controller 430 detects currents of the three second inductors L2, and when the current of at least one second inductor L2 is greater than the second current threshold, controls the inverter circuit 440 to stop operating. The specific value of the second current threshold may be comprehensively determined based on the withstand voltage value or the withstand current value of the switching transistor in the inverter circuit 440. The specific value of the second current threshold is not limited in embodiments of this application.

In an implementation, when the currents of the three second inductors L2 are all less than or equal to the second current threshold, the controller 430 may control the inverter circuit 440 to operate normally.

In an implementation, that the controller 430 controls, when the current of the at least one second inductor L2 is greater than the second current threshold, the inverter circuit 440 to stop operating includes: The controller 430 controls, when the average value of the current of the at least one second inductor L2 is greater than the second current threshold within the preset time, the inverter circuit 440 to stop operating. The specific value of the preset time is not limited in embodiments of this application. Therefore, when the current of the at least one second inductor L2 occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter control method provided in this embodiment of this application, when the differential-mode lightning strike occurs on the photovoltaic inverter 400, the controller 430 controls, based on the currents of the three second inductors L2, the inverter circuit 440 to stop operating, and the delay in the current conversion of the three second inductors L2 is lower. Therefore, the controller 430 can control the inverter circuit 440 to stop operating in a timely manner, thereby improving the safety and reliability of the photovoltaic inverter 400.

In an implementation, as shown in FIG. 9 and FIG. 11A and FIG. 11B, the photovoltaic inverter control method provided in this embodiment of this application further includes step S1005. When step S1005 is performed, step S1005 and step S1001 may be simultaneously performed, and step S1002 may be performed after step S1005.

S1005: The controller 430 detects the currents of the three second capacitors C2, and when the current of the at least one second capacitor C2 is greater than the third current threshold, controls the inverter circuit 440 to stop operating. The specific value of the third current threshold may be comprehensively determined based on the withstand voltage value or the withstand current value of the switching transistor in the inverter circuit 440. The specific value of the third current threshold is not limited in embodiments of this application.

In an implementation, when the currents of the three second capacitors C2 are all less than or equal to the third current threshold, the controller 430 may control the inverter circuit 440 to operate normally.

In an implementation, that the controller 430 controls, when the current of the at least one second capacitor C2 is greater than the third current threshold, the inverter circuit 440 to stop operating includes: The controller 430 controls, when the average value of the current of the at least one second capacitor C2 is greater than the third current threshold within the preset time, the inverter circuit 440 to stop operating. The specific value of the preset time is not limited in embodiments of this application. Therefore, when the current of the at least one second capacitor C2 occasionally jumps, the controller 430 cannot perform the misoperation to control the inverter circuit 440 to stop operating, so that the reliability of the photovoltaic inverter 400 can be improved.

Due to the electromagnetic induction phenomenon of the first inductor L1 (inverter inductor), there is the high delay in the current conversion of the first inductor L1. When the differential-mode lightning strike occurs on the photovoltaic inverter 110, the controller 114 controls, based on the current of the first inductor L1, the inverter circuit 112 to stop operating, and cannot control the inverter circuit 112 to stop operating in a timely manner. Consequently, the risk of damaging the photovoltaic inverter 110 is still high. According to the photovoltaic inverter control method provided in this embodiment of this application, when the differential-mode lightning strike occurs on the photovoltaic inverter 400, the controller 430 controls, based on the currents of the three second capacitors C2, the inverter circuit 440 to stop operating, and the delay in the current conversion of the three second capacitors C2 is lower. Therefore, the controller 430 can control the inverter circuit 440 to stop operating in a timely manner, thereby improving the safety and reliability of the photovoltaic inverter 400.

Based on this, as shown in FIG. 5, an embodiment of this application further provides the photovoltaic system 500. The photovoltaic system 500 includes the photovoltaic inverter 400. The photovoltaic inverter 400 includes the direct current port 410 and the three-phase alternating current port 420. The direct current port 410 is configured to connect to the output end of the photovoltaic array 200, and the three-phase alternating current port 420 is configured to connect to the power grid or the load 300. A circuit topology of the photovoltaic inverter 400 is the circuit topology of the photovoltaic inverter 400 shown in any one of FIG. 5, FIG. 6, FIG. 8, or FIG. 9.

The foregoing detailed descriptions and beneficial effect analysis of the photovoltaic inverter 400 may be correspondingly cited in the photovoltaic inverter control method and the photovoltaic system 500. Details are not described herein again in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A photovoltaic inverter, wherein the photovoltaic inverter comprises a controller, a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load;
an input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end; and
the controller is configured to: detect a voltage of the three-phase alternating current port, and when a voltage of at least one phase of alternating current port is greater than a voltage threshold, control the inverter circuit to stop operating.

2. The photovoltaic inverter according to claim 1, wherein
the controller is further configured to: when an average value of the voltage of the at least one phase of alternating current port is greater than the voltage threshold within preset time, control the inverter circuit to stop operating.

3. The photovoltaic inverter according to claim 1 or 2, wherein
the controller is further configured to: when time during which the inverter circuit is controlled to stop operating is greater than or equal to a time threshold, control the inverter circuit to resume normal operation.

4. A photovoltaic inverter, wherein the photovoltaic inverter comprises a controller, a direct current port, an inverter circuit, a first surge protector, three first inductors, three first capacitors, three second surge protectors, and a three-phase alternating current port, the direct current port is configured to connect to a photovoltaic array, and the three-phase alternating current port is configured to connect to a power grid or a load;
an input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, and a second end of the first surge protector is configured to connect to the grounding end; and
the controller is configured to: detect currents of the three first capacitors, and when a current of at least one first capacitor is greater than a first current threshold, control the inverter circuit to stop operating.

5. The photovoltaic inverter according to claim 4, wherein
the controller is further configured to: when an average value of the current of the at least one first capacitor is greater than the first current threshold within preset time, control the inverter circuit to stop operating.

6. The photovoltaic inverter according to claim 4 or 5, wherein
the controller is further configured to: when time during which the inverter circuit is controlled to stop operating is greater than or equal to a time threshold, control the inverter circuit to resume normal operation.

7. A photovoltaic inverter, wherein the photovoltaic inverter comprises a controller, a direct current port, an inverter circuit, a first surge protector, three first inductors, three first capacitors, three second surge protectors, a three-phase alternating current port, and three second inductors, the direct current port is configured to connect to a photovoltaic array, and the three-phase alternating current port is configured to connect to a power grid or a load;
an input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, and the three second inductors are respectively connected between the second ends of the three first inductors and the three-phase alternating current port; and
the controller is configured to: detect currents of the three second inductors, and when a current of at least one second inductor is greater than a second current threshold, control the inverter circuit to stop operating.

8. The photovoltaic inverter according to claim 7, wherein
the controller is further configured to: when an average value of the current of the at least one second inductor is greater than the second current threshold within preset time, control the inverter circuit to stop operating.

9. The photovoltaic inverter according to claim 7 or 8, wherein
the controller is further configured to: when time during which the inverter circuit is controlled to stop operating is greater than or equal to a time threshold, control the inverter circuit to resume normal operation.

10. A photovoltaic inverter, wherein the photovoltaic inverter comprises a controller, a direct current port, an inverter circuit, a first surge protector, three first inductors, three first capacitors, three second surge protectors, a three-phase alternating current port, three second inductors, and three second capacitors, the direct current port is configured to connect to a photovoltaic array, and the three-phase alternating current port is configured to connect to a power grid or a load;
an input end of the inverter circuit is connected to the direct current port, three phases of output ends of the inverter circuit are respectively connected to first ends of the three first inductors, second ends of the three first inductors are separately connected to the three-phase alternating current port, first ends of the three first capacitors are respectively connected to the second ends of the three first inductors, second ends of the three first capacitors are all configured to connect to a grounding end, first ends of the three second surge protectors are separately connected to the three-phase alternating current port, second ends of the three second surge protectors are all connected to a first end of the first surge protector, a second end of the first surge protector is configured to connect to the grounding end, the three second inductors are respectively connected between the second ends of the three first inductors and the three-phase alternating current port, first ends of the three second capacitors are respectively connected to the first ends of the three second surge protectors, and second ends of the three second capacitors are all configured to connect to the grounding end; and
the controller is configured to: detect currents of the three second capacitors, and when a current of at least one second capacitor is greater than a third current threshold, control the inverter circuit to stop operating.

11. The photovoltaic inverter according to claim 10, wherein
the controller is further configured to: when an average value of the current of the at least one second capacitor is greater than the third current threshold within preset time, control the inverter circuit to stop operating.

12. The photovoltaic inverter according to claim 10 or 11, wherein
the controller is further configured to: when time during which the inverter circuit is controlled to stop operating is greater than or equal to a time threshold, control the inverter circuit to resume normal operation.
